# EUROPEAN PATENT SPECIFICATION

(11) **EP 3 226 697 B1**
(45) Date of publication and mention of the grant of the patent: **03.04.2019**
(21) Application number: 15790989.6
(22) Date of filing: 09.11.2015
(51) Int. Cl.: A23G 9/22, A23G 9/26, A23G 9/28, A23G 9/48, A23G 9/50, B26D 3/08, B26D 3/00

(54) **APPARATUS AND METHOD FOR CUTTING OR EMBOSSING COATINGS**
VORRICHTUNG UND VERFAHREN ZUM SCHNEIDEN ODER PRÄGEN VON BESCHICHTUNGEN
APPAREIL ET PROCÉDÉ DE DÉCOUPE OU D'EMBOSSAGE D'ENROBAGES

(30) Priority: 02.12.2014 US 201462086321 P
(43) Date of publication of application: 11.10.2017
(73) Proprietor: Nestec S.A., 1800 Vevey (CH)
(72) Inventor: AMEND, Thomas Aloisius Valentinus, Bakersfield, California 93311 (US)
(74) Representative: Elleby, Gudrun
(86) International application number: PCT/EP2015/076069
(87) International publication number: WO 2016/087163

(56) References cited:
- EP-A1- 0 601 194
- WO-A1-02/078460
- WO-A1-2004/012519
- WO-A1-2013/064376
- WO-A2-2012/156538
- CN-Y- 200 976 814
- KR-A- 20130 127 687
- US-A- 1 397 198
- US-B1- 6 453 784

## Description

### Field of the invention

The present invention is defined by the claims and relates to a coating cutting tool and a method for cutting a coating on a frozen confection.

### Background

Frozen confectionery products consisting entirely of frozen gel or comprising a frozen gel coating are known and are popular in particular with children.

One example is a frozen confectionery product comprising a core consisting of a frozen confection said core being at least partially coated with a frozen flexible edible gel coating or layer. Such a frozen confectionery product is sold by Nestlé Thailand under the brand name "Eskimo Monkey". This product comprises an ice-cream core being coated with a frozen flexible edible gel layer. This gel layer can be peeled off by the consumer and eaten separately. Since the gel is resistant to liquefaction, even in the defrosted state, the product parts that have been peeled off by the consumer remain intact without melting and dripping. To facilitate the peeling, four longitudinal cutting lines are provided in the gel layer, so that four flaps of peel can be peeled off. One thereby achieves a banana-style peeling effect.

WO2013064376 discloses a product with a core of ice cream which is coated with at least two visually distinct layers of jelly. The patent application mentions that when the two gel layers are frozen in two separate steps, they show little adhesion between each other, so that they can be peeled off separately by a consumer. However, due to the very close characteristic, both jelly shell and core, or the different layers of jelly, can be found to adhere to each other and may be difficult to peel apart from each other during consumption in particular for children who enjoy these kinds of composite frozen confectionery products. For example, thinner layers of coating may be more difficult to peel off. To facilitate the peeling of the gel coating it is important that the product has well defined pre-cuts in the gel coating.

WO 2013/064376 relates to a frozen confectionery product comprising flexible gel layers. WO 2013/064376 explains that longitudinal cutting lines can be cut into the gel layer using several blades arranges in such a manner that when the product is lowered between these and pulled out, the lines are cut into the gel coating.

WO 2012/156538 relates to a cutting or embossing tool comprising at least two elements having knives along an inner void. The two elements are closed around the product to be cut. The two elements moves along a horizontal path.

To cut spiral cutting line into the gel coating, a cutting tool as described in the International Patent Application PCT/CNllI/077465 filed on July 22nd, 2011 can be used.

When manufacturing a shell and core products on a standard industrial production line in a first production step, a liquid, jelly-like material is dosed into a mold cavity. As the mold is suspended into a cold brine solution, the jelly material starts to solidify and freeze. Once a thin layer of the jelly material has become frozen, the remaining unfrozen material is sucked out of the mold, creating a shell of frozen jelly. Into this jelly-shell, the core material, such as ice cream mix, is dosed and allowed to freeze. Prior to full completion of freezing, a stick is inserted and the product is completely frozen. Subsequently, the outside of the mold is sprayed with a warm liquid to soften or melt a thin surface-layer of the product. Using grippers the product is pulled out of the mold by its stick. The product, suspended from the grippers, is then transported towards other process steps, and finally to a wrapping machine.

To manufacture a peelable stick, an additional process steps is included to apply of cuts to the jelly-shell. These cuts are essential for a proper working of the peelable effect, which means that the consumer can easily pull down slices of jelly material using his or her teeth. The role of the cut lines is to guide the separation of the jelly to form e.g. banana-type slices. Without the cut lines, the jelly skin would rather be torn-off in pieces, which does not reflect a banana-type peeling experience. The industrial application of such cut lines, however, constitutes a technical challenge.

CN200976814 describes frozen confection products characterized by an ice cream core and a gel-like shell on various overall shapes. The shell part can be peeled off by the consumer and consumed. The utility model does not specify how to apply the cut lines.

WO2014/079848 specifies compositional details of the shell material that can be used to create a gel-type shell that can be subsequently sliced and displays graphics of a frozen confection exhibiting a spiral-type peeling option. The patent mentions a cutting action to apply lines of weakness to guide the spiral-type peeling action. The cut is applied by two set of blades, which are pressed from opposite sides against the surface in a horizontal movement. During the process, the frozen confection is vertically suspended by the stick via grippers.

While other shapes of cut lines than a spiral can principally be manufactured using that process, it has been found this procedure has limitations when applied to vertical cut lines for generally cylinder-shaped products. In particular, the process meets limitations if more than two cut lines, such as 3, 4 or more lines, are to be produced with the lines evenly distributed around the circumference of the product. The problems arise from the fact that on modern production lines, the products are arranged in rows of typically 4 to 20 or more products side-by-side. The products are suspended from their stick and there is little space between the products available to arrange cutting mechanisms in the gap between adjacent frozen confections. Even if the gap is large enough to accommodate such mechanisms, such a procedure would require a complex mechanical installation.

One problem with the current cutting mechanisms is that it provides mechanical stress on the production line when products are moved up and down.

Furthermore, for frozen confection products in the form of a stick with longitudinal cut lines, it was found that the products tend to remain stuck in the cutter or they that may break apart during the process of cutting of the coating.

None of the documents describe a solution to improve the cutting of a gel layer of a frozen confection.

There is therefore a need to improve on the cutting of the gel coatings both for single and composite products with multiple gel layers.

### Object of the invention

It is the objective of this invention to provide a tool and a method to apply such cut lines on the frozen confection coating while avoiding the aforementioned disadvantages.

### Summary of the invention

It was found that a disk-shaped side knives in combination with an end knife provides a solution to the above-discussed drawbacks.

Accordingly, a coating cutting tool for frozen confection comprising
a frame defining a product void for receiving a product at least partly coated,
a set of disk-shaped side knives comprising at least two knives mounted on the frame on opposite sides of the product void, wherein the knives are rotatable arranged such that they can rotate about their axis when a product is introduced and/or retracted between the knives, and
an end knife for cutting the coating on the end of the frozen confection.

The invention while providing well defined cutting pattern also reduces the force needed to pull or push a product into or from the cutting mechanism. It has the further advantage that products that accidentally get stuck inside knives assembly may easily be released.

According to a second aspect the invention relates to a method for cutting a coating on a frozen confection comprising
providing a coating cutting tool according to at least claim 1,
providing a frozen confection being at least partially coated,
inserting the frozen confection into the coating cutting tool product void until the coating of the end of the frozen confection engages at least partly with the end knife or knives,
cutting the coating on the frozen confection on the sides with the first pair of disk-shaped side knives, and removing the frozen confection again, and
wherein the cutting of the coating on the side of the product is due to the relative movement between the coated frozen confection and the side knives.

### FIGURES

Fig. 1 shows schematically a coating cutting tool with a set of 4 disk-shape side knives oriented around the product in a way that allows rotation of the disks around their axis. A cross-shaped end knife is located beneath the disk-shaped knifes.
Fig. 2 depicts schematically a coating cutting tool with a set of disk shaped side knives which turn around their axis but can also rotate upwards around their fixation arms. When the product moves downwards, the disks are in the cutting mode and slice the coating
Fig. 3 schematically demonstrates the upwards swinging of the disk-shaped side knives when the product is lifted up.
Fig. 4 shows schematically a coating cutter tool with a set of disk-shaped side knives including the end knife, moving up/down for cutting. The product does not move.
Fig. 5 shows schematically a coating cutter tool with plunger for clearing stuck products in side view and top view.
Fig. 6 shows schematically a coating cutter tool mounted on a rail to allow removal of the knife for clearing out stuck products
Fig.7 schematically depicts a coating cutting tool with the disk-shaped side knifes fixed on a rotatable mechanism and a counterweight during the insertion of the product.
Fig. 8 schematically shows a coating cutting tool with the disk side knifes fixed on a rotatable mechanism with counterweight during the retraction of the product and cutting.

### Detailed description of the invention

In the present context the coating on the frozen confectionery product is a flexible coating. In a preferred embodiment of the invention the coating is a gel coating.

In one preferred embodiment of the invention the frame comprises a rotatable mechanism onto which the disk-shaped side knives are rotatable mounted, which rotatable mechanism can move the disk-shaped side knives into a product coating cutting position for cutting the coating on the side of the product and out of such a position to a non engaging position to allow the product to be moved passed the disk-shaped side knives.

In a preferred embodiment of the invention the position of the set of side cutting disks and the end knife are arranged such that the cutting lines on side of the products and cutting lines at the end of the product are aligned. This allows e.g. peels running from the top of the product and along the sides to be formed. For example, a banana type peels can be made. The cutting lines of the side and top cut may be aligned so that they are directly abutting and form a common groove in the coating or may be positioned with a space or abutting however still allowing a continuous peel to be formed when the top coating is being pulled.

In the present context a product void for receiving a product is an open space within the cutting tool wherein the product can be inserted.

Further in the present context a frame is a structure or housing onto which the side disk knives are mounted and which defines the void. The frame contains an inlet funnel to guide the product towards the disk knifes and side guides to center the product for cutting.

The side knives are preferably blades of metal. The preferred thickness of the blades is 0.5 to 5 mm related to the part of the disks that is buried inside the coating layer during cutting.

Further in the present context an end knife is a knife which may have one or more cutting blades. In a preferred embodiment the end knife has 2 to 6 blades arranged in a cross or a star.

In the present context "cutting" means cutting, embossing, providing notches or scores.

On one embodiment, the cutting disks are fixed on their axis in a manner that allows the disks to rotate around their axis during product introduction and retraction.

In another advantageously embodiment of the coating cutter tool the disk-shaped side knives by means of the rotatable mechanism are rotatable to the product cutting position when the product is moved out of the product void. In this embodiment confectionery coating is first introduced into the void, cut by the end knives and then the side cutting disk moved into a cutting position, and the cutting of the side coatings takes place as the frozen confection is moved out of the void.

In another advantageously embodiment of the coating cutter tool the disk-shaped side knives by means of the rotatable mechanism are rotatable to a product cutting position when the product is introduced into the product void. In this embodiment the products are pushed through the cutting disks as the product descends into the void while the coating is cut until it reaches the end knife. Then the side disk knives are rotated to a non-engaging position and the product can be freely moved out of the cutter.

To secure the rotatable mechanism during the engagement between the disk-shaped side knives and the product coating, the cutting tool may further comprise blocking means statically fixing the rotation of the rotatable mechanism.

In a further embodiment of the invention, the rotatable disk-shaped knives are pushed into and out of a product engagement position with a linear movement.

In a method according to the invention the side disk knives are rotated into a fixed product cutting position before the product is introduced into the product void and released from this cutting position when the product is moved out of the product void again. This provides precise cutting line.

In yet another method according to the invention the side disk knives are rotated into a product cutting position when the product has reached the end knife and engages with the coating of product when the product is moved out of the void. This also has the advantage that precise cutting lines are obtained.

The insertion of the product into the coating cutting tool is done by providing a fixed coating cutting tool frame and moving the frozen confection into the void of the tool. Alternatively, the insertion of the product into the coating cutting tool is done by moving the coating cutting tool frame to enclose the frozen confection in the void.

In a preferred embodiment of the coating cutting tool the rotatable mechanism comprises a counterweight, which counterweight is situated in a position which is opposite of its point of rotation compared to the position of the disk-shaped side knives.
The counterweight pushes the disk-shaped side knives into engagement with the coating and ensures a continuous cut in the coating. Alternatively, the knives may be spring loaded to push the knives into close contact with the coating surface.

The present invention is particular advantageous if the force that can be provided by the up/down moving mechanism of the production line is at the limit of its maximum force, or if the product and coating may be negatively affected by the forces excerted during the cutting, such as the coating may separate from the core of the product. To ease the cutting it has been found that warming the coating sufficiently to soften it by melting partially the ice is an advantage. The gel coating will however still remain intact after partially melting the ice, whereas a different coating such as a water ice coating or an ice cream coating would simply drip off when warming up.

In a preferred embodiment the coating cutting tool has a first set of disk-shaped side knives which are arranged to cut the coating of a cylindrical product along its longitudinal axis.

In the coating cutter the disk-shaped side knives may be arranged such that in the engaged position they cut through the full thickness of the coating. A preferred depth of the cut is in the range from 0.5 to 7 mm but not limited thereto.

In order to clear out products from the cutting void which may accidentally remain stuck inside the product void, such as resulting from product breakage or breakage of the stick by which the product is suspended, a movable plunger, which is preferably mounted on the frame may assist in the removal of such products by pushing them upwards and out of the product void after the cutting step is finished.

In the present context a gel coating may be a layer of gel which completely or partly covers a frozen confectionery core.

Further in the present context unless otherwise indicated % of a component means the % of weight based on the weight of the composition, i.e. weight/weight %.

In a preferred embodiment of the invention the gel coating has a total solid content from 20 to 45% based on weight of the gel (wt) and comprises 0.2 to 2 % wt of a gelling agent or combination of gelling agents, more preferably from 0.3 to 1.5% wt of gelling agent or agents. The solid content and the gelling agent provide a gel coating which is both flexible and resilient enough that it can be peeled off the frozen confection core or from other gel coatings without breakage.

Preferably the gel coating comprises gelling agent selected from the group consisting of konjac, carrageenan, xanthan, locust bean gum, gellan gum, pectins, alginates, agar, gelatine and starch or a combinations thereof.

The gel coating composition of the present invention may further include one or more additional ingredients such as flavors, sweeteners, colorants, setting salts, acids, buffer salts or a combination thereof.

Sweeteners can include, for example, sucrose, fructose, dextrose, maltose, dextrin, levulose, tagatose, galactose, corn syrup solids and other natural or artificial sweeteners. Sugarless sweeteners can include, but are not limited to, sugar alcohols such as maltitol, xylitol, sorbitol, erythritol, mannitol, isomalt, lactitol, hydrogenated starch hydrolysates, and the like, alone or in combination. Usage level of the flavors, sweeteners and colorants will vary greatly and will depend on such factors as potency of the sweetener, desired sweetness of the product, level and type of flavor used and cost considerations. Combinations of sugar and/or sugarless sweeteners may be used.

In a preferred embodiment of the frozen confectionery product the gel coating comprises 25 to 45 % wt of sweetener, preferably from 30 to 43 % wt. Advantageously, the sweetener is sucrose or glucose syrup or a combination thereof. In a further preferred embodiment of the invention, the sweetener consists of 15% wt sugar and 18% wt glucose syrup.

The frozen confectionery product according to the invention may comprise one or more additional gel coating(s) on top of or beneath the gel coating, which additional gel coatings at least partly overlaps with the other gel coating.

The frozen confection product according to the invention may be provided with at least two cutting line allowing peeling off the gel-coating at least partially. The cutting line does not necessarily have to extend through the complete gel coating. In particular, according to one embodiment of the invention, it is possible that the depth of the cutting line or lines corresponds to the thickness of an outer gel layer. In this case, the gel coating can be peeled off partially, i.e. only the outer gel layer can be peeled off, while the inner gel layer, which is not provided with any cutting lines, remains intact.

According to a preferred embodiment of the invention, several cutting lines extending longitudinally across the gel coating are provided, so that the coating can be peeled off by pulling down stripes, similar to peeling a banana. As mentioned above, it is possible that all of the layers constituting the coating or only an outer layer or several outer layers are peeled off.

It is further preferred that product comprises a stick having one portion which is inserted into the core and another portion by which the product can be handled and fixed in the coating cutter. Further, this allows easy handling of the product during manufacturing and consumption. The consumer can hold the stick with one hand, and peel off the gel layer with the other hand or using the teeth. Alternatively it is also possible to make products without a stick, for example in a dome shape or in a shape imitating the shape of a fruit such as an apple or a pear. These products can then be consumed as a dessert using a plate and a spoon.

According to a preferred embodiment of the invention, the gel layer comprises one or more gelling hydrocolloids, in particular a polyanionic gelling hydrocolloid. This leads to the desired consistency and peelablity. Gelling properties can be achieved by various stabilisers and combinations thereof. An overview of stabilisers used in ice cream and indications on its gelling properties can be found in literature such as "Ice Cream, Sixth Edition, R.T. Marshall, H. D. Goff, R.W. Hartel eds., Kluwer Academic/Plenum Publishers, 2003. Optionally the gel layer can comprise a gelation controller or inhibitor. This reduces the texture degradation that normally occurs when a gel is stored hot in its liquid state for a longer time, or when it is cooled down and then reheated.

Preferably each gel layer has a thickness of between 2 and 5 mm. A gel layer which is too thin makes the peeling difficult, since the gel layer may rupture. A gel layer which is too thick is not desirable as it is more difficult to peel, and because of the relatively high sugar content of the gel which has a negative impact on the nutritional characteristics of the product.

It should also be noted that the gel layer does not have to cover the core completely, but may cover only a part or parts of the product.

The frozen confection with a gel coating can be produced with a method for manufacturing comprising the following steps:
- filling a first jelly mix into a mould, freezing the jelly mix so that it forms a first frozen gel coating in the mould and sucking off the unfrozen jelly mix,
- optionally filling a second jelly mix into a mould, freezing the jelly mix so that it forms a second frozen gel coating in the mould and sucking off the unfrozen jelly mix, thereby obtaining a shell consisting of two frozen gel coatings,
- filling a third mix forming the core consisting of a frozen confection into said shell,
- freezing and de-moulding the product,
- optionally inserting a stick into the core of the frozen or partly frozen confection.

In a further embodiment of the invention the cutting line does not extend through the complete gel coating. In particular, it is possible that the depth of the cutting line or lines corresponds to the thickness of an outer gel coating. In this case, the gel coating can be peeled off partially, i.e. only the outer gel coating can be peeled off, while the inner gel layer, which is not provided with any cutting lines, remains intact.

It should be noted that, although the cutting lines preferably extend through the entire gel coating, so that it can be peeled off entirely, they can also only cut through an outer gel layer, leaving an inner gel layer intact. This results then in a product where only the outer gel layer can be peeled off, revealing an inner gel layer (having preferably a different color.

The frozen confection forming the core may e.g. be ice cream, milk ice, water ice, sherbet, sorbet or a gel.

In a desirable design to facilitate the peeling, four longitudinal cutting lines are provided in the gel layer, so that four flaps of peel can be peeled off. One thereby achieves a banana-style peeling effect. The number of flaps may vary e.g. being 3 to 5 or more for different product designs.

Alternatively, the frozen confectionery product may be produced by extruding the core and then the adding gel coating(s) done by dipping, enrobing or spraying.

### EXAMPLES

By way of example and not limitation, the following examples are illustrative of various embodiments of the present disclosure.

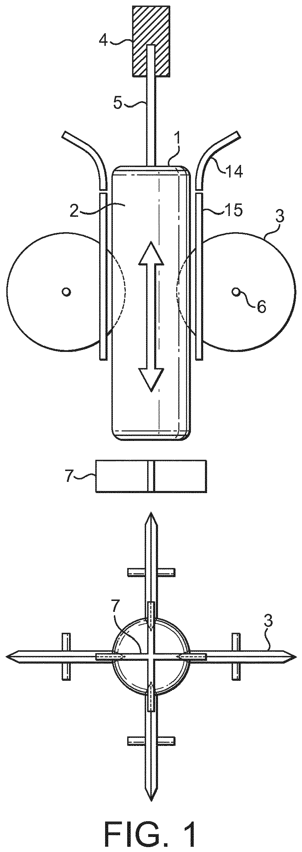

Several examples of the process of the invention will be given to demonstrate the invention and variants of it. If not otherwise stated, the application of the cuts applies in particular for peelable sticks of generally cylindrical shape. It further applies to products situated at the production line, right after demolding, typically at the location of the coating dipping station. The products are suspended from grippers on their stick in a row of several products and perform down/up movements typically used for dipping into coating. If not stated otherwise, the coating dip tank has been replaced by set of knife assemblies as described in detail in the examples below. The end knife is shown in fig. 1 only, but the same principle applies to the other drawings as well.

### Example 1

Fig. 1 schematically depicts a coating cutting tool with a set of 2 disk-shaped side knives (3) oriented around the product void (2) into which the product (1) is introduced and subsequently retracted by means of a gripper (4) holding the product by its stick (5). The number of knives can be two or more. Typically, the number of knives is 4. The knives consist of sharp disk blades which are mounted on an axis (6) in a way that allows them to rotate as the product is inserted and retracted, while reaching through the skin layer of the product up to the core layer. The product is pushed into the product void until the desired length of the cut is achieved. The figures shows a side view of product (1) hold on the stick (5) by a gripper (4). The end knife (7) is located beneath the product. Also shown is a schematic top view showing 4 side knives (3) and the cross shaped end knife (7) with both sets of knifes being in alignment to generate a cutting groove that is continuous between the end knife (7) and the side knife (3).

The product funnel (14) helps guiding the product into the product void (2) and the side guide (15) supports centering of the product inside the product void (2).

### Example 2

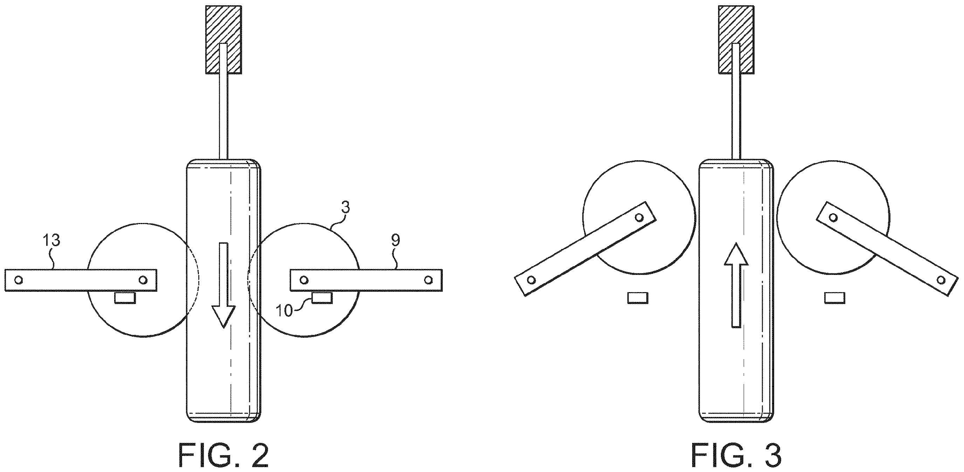

The embodiment of the invention shown in Fig. 2 uses disk-shaped side knives (3), which are fixed on a rotatable mechanism (13). Said rotatable mechanism allows rotation around axis (9) up to a limitation imposed by blocking means (10). A product being introduced into the product void is thus cut during the down movement as the knives are in a cutting position. When the product is retracted back (Fig. 3), the rotatable mechanism allows the disk-shaped side knifes to swing upwards and out of the way in order not to impose any resistance towards the up-movement of the product. This is of advantage in case of products accidentally getting stuck inside the knife assembly. Such products have to be manually pushed out, e.g. by means of a stick or a hook. Doing so against the resistance of the disk knifes is hard. With the knives swinging out of the way, this action is greatly facilitated, making handling of such irregularities easier

### Example 3

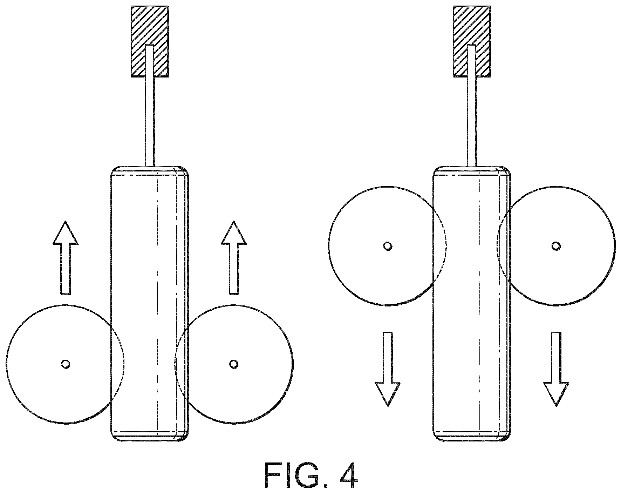

The embodiment of the invention shown in Fig. 4 relates to the movement of the coating cutting tool along the product axis while applying the cuts. In this example, the product is not lowered into the coating cutting. Instead, the coating cutting tool is raised to become inserted into the static product. After application of the cut, the coating cutting tool is retracted back down. The advantage of this set-up consists in eliminating the need to forcefully lower and raise the product, thereby avoiding any mechanical stress on the production line

### Example 4

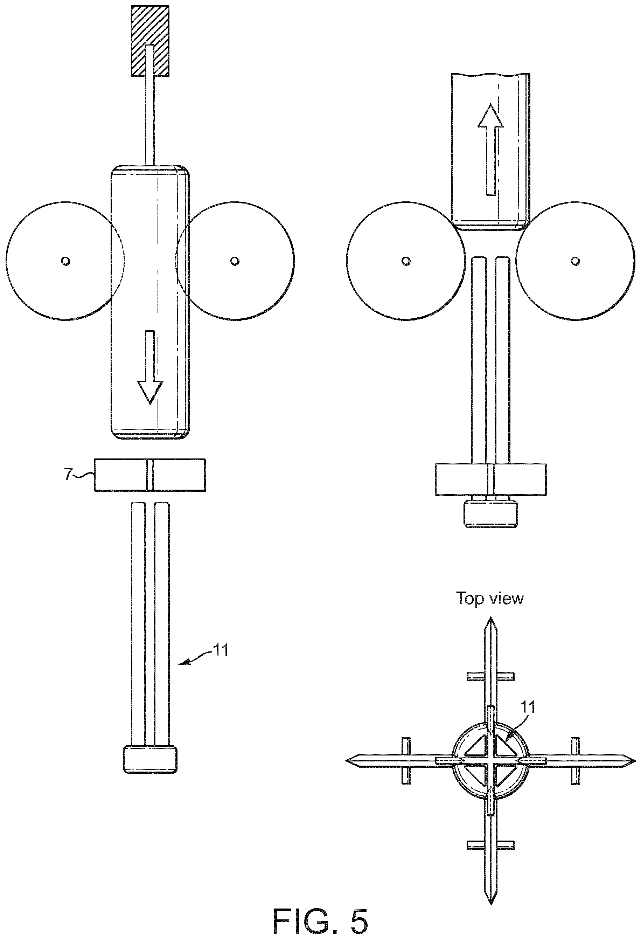

The embodiment of the invention shown in Fig. 5 relates to a coating cutting tool comprising a mechanism for removing products that get accidentally stuck inside the coating cutting tool during the cutting process. One or more rods or plungers (11) are located at the bottom of the coating cutter, beneath the end knife (7). The top view in Fig. 5 shows the arrangement of 4 clearing rods (11) relative the product and coating cutting tool. Once the product has been introduced into the coating cutting knife and is being retracted, said rods or plungers are pushed upwards by an actuator such as an air piston, following the retracting product. Products that got stuck inside the knife assembly or product parts remaining inside the assembly are then pushed out by the rods, clearing the assembly for the next product. The rods' pushing action may be activated on demand by a manual switch or can be automatically applied at each cutting cycle.

### Example 5

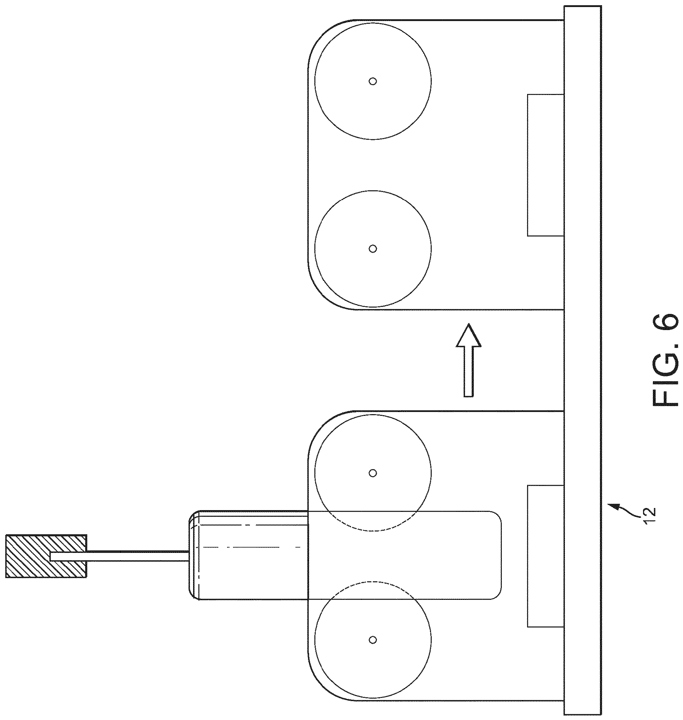

The embodiment of the invention shown in Fig. 6 depicts a further mechanism to facilitate removal of products that got stuck inside the coating cutting tool during cutting. This mechanism comprises the installation of the coating cutting tool on a short rail (12). Using an air piston or another actuator, this mechanism allows to push away the coating cutter from the path of the products' up/down movement. The coating cutter can then conveniently be cleared before being pushed back to the original position.

### Example 6

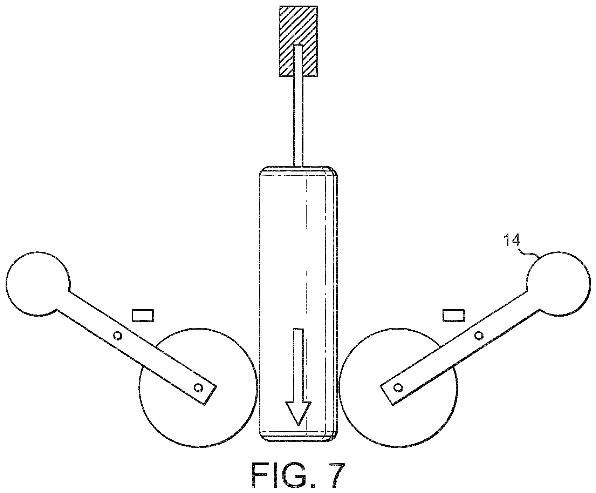

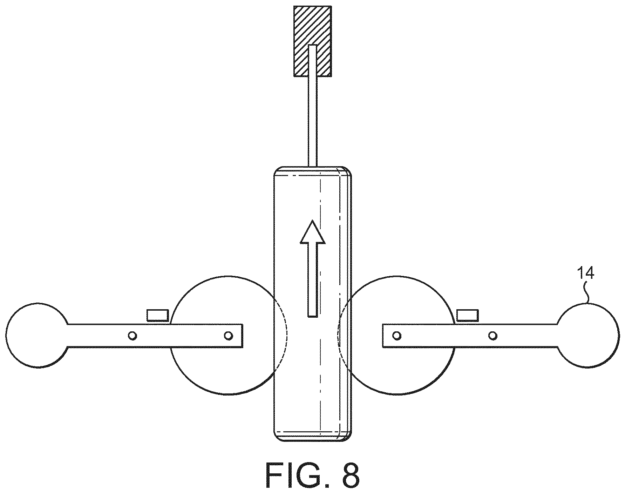

The embodiment of the invention shown in Fig. 7 and 8 involves principally a disk-shaped knife as described in Example 1 or 2. However, said knife assembly with the knife capable of swinging out of the way upon product retraction, is installed upside-down. Consequently, this set-up allows inserting the products into the coating cutter without performing any cutting, since the knife has swung out of way (fig. 7). When pulling back the product out of the coating cutter, then the knives engage and are forced into the gel layer by means of counterweight (14) or a spring and the force exerted by the up-moving product. The cuts are therefore applied during the up-movement of the product. Therefore, no pressure is applied on the product and on the stick by which it is kept, but the force is a pull-force. This procedure reduces the risk of products getting stuck in knives in the coating cutter in case of breakage of the stick from insertion pressure.

## Claims

1. A coating cutting tool for frozen confection comprising
a frame defining a product void (2) for receiving a product at least partly coated,
a set of disk-shaped side knives (3) comprising at least two knives mounted on the frame on opposite sides of the product void (2), wherein the knives are rotatably arranged such that they can rotate about their axis (6) passing through the centre of the disk-shaped knives when a product is introduced and/or retracted between the knives, and
an end knife (7) for cutting the coating on the end of the frozen confection.

2. A coating cutting tool according to claim 1, wherein the frame comprises a rotatable mechanism onto which the disk-shaped side knives (3) are rotatably mounted and have a product side coating cutting position and a product non-engaging position, which rotatable mechanism can move the disk-shaped side knives (3) into the product coating cutting position for cutting the coating on the side of the product and out of such a position to a non engaging position to allow the product to be moved past the disk shaped side knives (3).

3. A coating cutting tool according to any of the preceding claims, wherein the position of the set of disk-shaped knives and the end knife (7) are arranged such that the cutting lines on side of the products and cutting lines at the end of the product are aligned.

4. A coating cutting tool according to any of the preceding claims, wherein the cutting tool further comprises blocking means (10) statically fixing the disk shaped side knives (3) of the rotatable mechanism in the product cutting position.

5. A coating cutting tool according to any of the preceding claims, wherein the rotatable mechanism comprises a counterweight, which counterweight is situated in a position which is opposite of its point of rotation compared to the position of the disk-shaped side knives (3).

6. A coating cutting tool according to any of the preceding claims, wherein a movable plunger (11) is mounted on the frame to assist in the removal of the frozen confection from the knives of the cutting tool.

7. A method for cutting a coating on a frozen confection comprising providing a coating cutting tool according to any of the preceding claims,
providing a frozen confection being at least partially coated,
inserting the frozen confection into the coating cutting tool product void (2) until the coating of the end of the frozen confection engages at least partly with the end knife (7),
cutting the coating on the frozen confection on the sides with the at least two disk-shaped side knives (3), and removing the frozen confection, and
wherein the cutting of the coating on the side of the product is due to the relative movement between the coated frozen confection and the side knives (3).

8. A method according to claim 7, wherein the disk-shaped side knives (3) are rotated into a fixed product cutting position before the product is introduced into the product void (2) and released from this cutting position when the product is moved out of the product void (2)

9. A method according to claim 7, wherein the disk shaped-side knives (3) are rotated into a product cutting position when the product has reached the end knife (7) and engages with the coating of product when the product is moved out of the void (2).

10. A method according to any of claims 7 to 9, wherein the insertion of the product into the coating cutting tool is done by providing a fixed coating cutting tool frame and moving the frozen confection into the void (2) of the tool.

11. A method according to any of claims 7 to 9, wherein the insertion of the product into the coating cutting tool is done by moving the coating cutting tool frame to enclose the frozen confection in the void (2).

12. A method according to any of claims 7 to 11, wherein frozen confection has a gel coating, preferably a gel coating with a total solid content from 20 to 45% based on weight of the gel (wt) and comprises 0.2 to 2 % wt of a gelling agent.

13. A method according to any of claims 7 to 12, wherein the frozen confection has a stick (5) having one portion which is inserted into the core, and another portion by which the frozen confection is fixed relative to the coating cutting tool.

## Patentansprüche

1. Beschichtungsschneidwerkzeug für gefrorenes Konfekt, umfassend
einen Rahmen, der einen Produkthohlraum (2) zur Aufnahme eines mindestens teilweise beschichteten Produkts definiert,
einen Satz scheibenförmiger Seitenmesser (3), umfassend mindestens zwei auf dem Rahmen auf gegenüberliegenden Seiten des Produkthohlraums (2) angebrachten Messern, wobei die Messer drehbar derart angeordnet sind, dass sie um ihre durch die Mitte der scheibenförmigen Messer verlaufende Achse (6) drehen können, wenn ein Produkt zwischen die Messer eingeführt und/oder zurückgezogen wird, und
ein Endmesser (7) zum Schneiden der Beschichtung am Ende des gefrorenen Konfekts.

2. Beschichtungsschneidwerkzeug nach Anspruch 1, wobei der Rahmen einen drehbaren Mechanismus umfasst, auf dem die scheibenförmigen Seitenmesser (3) drehbar montiert sind und eine Produktseiten-Beschichtungsschneidposition und eine Produkt-Nichteingriffsposition aufweisen, wobei der drehbare Mechanismus die scheibenförmigen Seitenmesser (3) in die Produkt-Beschichtungsschneidposition, um die Beschichtung an der Seite des Produkts zu schneiden, und aus solch einer Position in eine Nicht-Eingriffsposition bewegen kann, um das Produkt an den scheibenförmigen Seitenmessern (3) vorbei bewegen zu können.

3. Beschichtungsschneidwerkzeug nach einem der vorstehenden Ansprüche, wobei die Position des Satzes scheibenförmiger Messer und des Endmessers (7) so angeordnet sind, dass die Schnittlinien auf Seiten der Produkte und Schnittlinien am Ende des Produkts ausgerichtet sind.

4. Beschichtungsschneidwerkzeug nach einem der vorstehenden Ansprüche, wobei das Schneidwerkzeug ferner Blockiermittel (10) umfasst, die die scheibenförmigen Seitenmesser (3) des drehbaren Mechanismus in der Produktschneidposition statisch fixieren.

5. Beschichtungsschneidwerkzeug nach einem der vorstehenden Ansprüche, wobei der drehbare Mechanismus ein Gegengewicht umfasst, wobei das Gegengewicht in einer Position angeordnet ist, die im Vergleich zur Position der scheibenförmigen Seitenmesser (3) entgegengesetzt zu seinem Drehpunkt ist.

6. Beschichtungsschneidwerkzeug nach einem der vorstehenden Ansprüche, wobei ein beweglicher Kolben (11) an dem Rahmen montiert ist, um die Entfernung des gefrorenen Konfekts von den Messern des Schneidwerkzeugs zu unterstützen.

7. Verfahren zum Schneiden einer Beschichtung auf einem gefrorenen Konfekt, umfassend
Bereitstellen eines Beschichtungsschneidwerkzeugs nach einem der vorstehenden Ansprüche,
Bereitstellen eines gefrorenen Konfekts, das mindestens teilweise beschichtet ist,
Einführen des gefrorenen Konfekts in den Beschichtungsschneidwerkzeug-Produkthohlraum (2), bis die Beschichtung des Endes des gefrorenen Konfekts mindestens teilweise mit dem Endmesser (7) in Eingriff ist,
Schneiden der Beschichtung auf dem gefrorenen Konfekt an den Seiten mit den mindestens zwei scheibenförmigen Seitenmessern (3) und Entfernen des gefrorenen Konfekts, und
wobei das Schneiden der Beschichtung an der Seite des Produkts auf die Relativbewegung zwischen dem beschichteten gefrorenen Konfekt und den Seitenmessern (3) zurückzuführen ist.

8. Verfahren nach Anspruch 7, wobei die scheibenförmigen Seitenmesser (3) in eine feste Produktschneidposition gedreht werden, bevor das Produkt in den Produkthohlraum (2) eingeführt und aus dieser Schneidposition gelöst wird, wenn das Produkt aus dem Produkthohlraum (2) bewegt wird.

9. Verfahren nach Anspruch 7, wobei die scheibenförmigen Seitenmesser (3) in eine Produktschneidposition gedreht werden, wenn das Produkt das Endmesser (7) erreicht hat und in die Produktbeschichtung eingreift, wenn das Produkt aus dem Hohlraum (2) bewegt wird.

10. Verfahren nach einem der Ansprüche 7 bis 9, wobei das Einführen des Produkts in das Beschichtungsschneidwerkzeug durch Bereitstellen eines fixierten Beschichtungsschneidwerkzeugrahmens und Bewegen des gefrorenen Konfekts in den Hohlraum (2) des Werkzeugs erfolgt.

11. Verfahren nach einem der Ansprüche 7 bis 9, wobei das Einführen des Produkts in das Beschichtungsschneidwerkzeug durch Bewegen des Beschichtungsschneidwerkzeugrahmens, um das gefrorene Konfekt in dem Hohlraum (2) zu umschließen, erfolgt.

12. Verfahren nach einem der Ansprüche 7 bis 11, wobei gefrorenes Konfekt eine Gelbeschichtung, vorzugsweise eine Gelbeschichtung mit einem Gesamtfeststoffgehalt von 20 bis 45 Gew.-%, bezogen auf das Gewicht des Gels (Gew.), aufweist und zu 0,2 bis 2 Gew.-% ein Geliermittel umfasst.

13. Verfahren nach einem der Ansprüche 7 bis 12, wobei das gefrorene Konfekt einen Stiel (5) aufweist, der einen Abschnitt, der in den Kern eingeführt wird, und einen anderen Abschnitt, durch den das gefrorene Konfekt relativ zu dem Beschichtungsschneidwerkzeug fixiert wird, aufweist.

## Revendications

1. Outil de découpe d'enrobage pour une confiserie congelée, comprenant
un cadre définissant une cavité à produit (2) pour recevoir un produit au moins partiellement enrobé,
un ensemble de couteaux latéraux (3) en forme de disque, comprenant au moins deux couteaux montés sur le cadre sur des côtés opposés de la cavité à produit (2), les couteaux étant agencés de manière rotative de manière telle qu'ils peuvent tourner autour de leur axe (6) passant à travers le centre des couteaux en forme de disque lorsqu'un produit est introduit entre les couteaux et/ou retiré de ceux-ci, et
un couteau d'extrémité (7) pour découper l'enrobage sur l'extrémité de la confiserie congelée.

2. Outil de découpe d'enrobage selon la revendication 1, dans lequel le cadre comprend un mécanisme rotatif sur lequel les couteaux latéraux (3) en forme de disque sont montés de manière rotative et ont une position de découpe d'enrobage côté produit et une position de non-contact avec le produit, lequel mécanisme rotatif peut déplacer les couteaux latéraux (3) en forme de disque dans la position de découpe d'enrobage de produit, pour découper l'enrobage sur le côté du produit, et hors d'une telle position vers une position de non-contact pour permettre au produit d'être déplacé au-delà des couteaux latéraux (3) en forme de disque.

3. Outil de découpe d'enrobage selon l'une quelconque des revendications précédentes, dans lequel la position de l'ensemble de couteaux en forme de disque et la position du couteau d'extrémité (7) sont agencées de telle sorte que les lignes de découpe sur le côté des produits et les lignes de découpe à l'extrémité du produit sont alignées.

4. Outil de découpe d'enrobage selon l'une quelconque des revendications précédentes, dans lequel l'outil de découpe comprend en outre des moyens de blocage (10) fixant de façon statique les couteaux latéraux (3) en forme de disque du mécanisme rotatif dans la position de découpe de produit.

5. Outil de découpe d'enrobage selon l'une quelconque des revendications précédentes, dans lequel le mécanisme rotatif comprend un contrepoids, lequel contrepoids est situé dans une position qui est opposée à son point de rotation par rapport à la position des couteaux latéraux (3) en forme de disque.

6. Outil de découpe d'enrobage selon l'une quelconque des revendications précédentes, dans lequel un piston mobile (11) est monté sur le cadre pour assister le retrait de la confiserie congelée des couteaux de l'outil de découpe.

7. Procédé de découpe d'un enrobage sur une confiserie congelée, comprenant
la fourniture d'un outil de découpe d'enrobage selon l'une quelconque des revendications précédentes,
la fourniture d'une confiserie congelée au moins partiellement enrobée,
l'insertion de la confiserie congelée dans la cavité à produit (2) de l'outil de découpe d'enrobage jusqu'à ce que l'enrobage de l'extrémité de la confiserie congelée entre au moins partiellement en contact avec le couteau d'extrémité (7),
la découpe de l'enrobage sur la confiserie congelée sur les côtés à l'aide des au moins deux couteaux latéraux (3) en forme de disque et le retrait de la confiserie congelée et
dans lequel la découpe de l'enrobage sur le côté du produit est due au mouvement relatif entre la confiserie congelée enrobée et les couteaux latéraux (3).

8. Procédé selon la revendication 7, dans lequel les couteaux latéraux (3) en forme de disque sont mis en rotation dans une position de découpe fixe de produit avant que le produit soit introduit dans la cavité à produit (2) et dégagés de cette position de découpe lorsque le produit est déplacé hors de la cavité à produit (2).

9. Procédé selon la revendication 7, dans lequel les couteaux latéraux (3) en forme de disque sont tournés dans une position de découpe de produit lorsque le produit a atteint le couteau d'extrémité (7) et vient en contact avec l'enrobage du produit lorsque le produit est déplacé hors de la cavité (2).

10. Procédé selon l'une quelconque des revendications 7 à 9, dans lequel l'insertion du produit dans l'outil de découpe d'enrobage est effectuée par l'utilisation d'un cadre d'outil de découpe fixe et le déplacement de la confiserie congelée dans la cavité (2) de l'outil.

11. Procédé selon l'une quelconque des revendications 7 à 9, dans lequel l'insertion du produit dans l'outil de découpe d'enrobage est effectuée par le déplacement du cadre d'outil de découpe d'enrobage pour enfermer la confiserie congelée dans la cavité (2).

12. Procédé selon l'une quelconque des revendications 7 à 11, dans lequel la confiserie congelée a un enrobage de gel, de préférence un enrobage de gel avec une teneur totale en solides de 20 à 45 % sur la base du poids du gel (en poids) et comprend 0,2 à 2 % en poids d'un agent gélifiant.

13. Procédé selon l'une quelconque des revendications 7 à 12, dans lequel la confiserie congelée a un bâton (5) ayant une partie qui est insérée dans le noyau et une autre partie par laquelle la confiserie congelée est fixée par rapport à l'outil de découpe d'enrobage.
